# EUROPEAN PATENT APPLICATION

(11) **EP 2 425 953 A1**
(43) Date of publication of application: **07.03.2012**
(21) Application number: 10175080.0
(22) Date of filing: 02.09.2010
(51) Int. Cl.: B29C 33/32, B29C 45/26

(54) **An injection moulding apparatus, and an implement for an injection moulding apparatus**

(71) Applicant: Superfos A/S, 2630 Taastrup (DK)
(72) Inventor: Den Braber, Tony, Runcorn, Cheshire WA7 2AS (GB)
(74) Representative: Sundien, Thomas

(57) **Abstract**

The present invention relates generally to injection moulding apparatuses, and broadly provides a novel way of fixing a device to a movable frame, such as a robot arm, of the apparatus, the device being for inserting an item into a female mould part of the apparatus prior to moulding an object or product in the cavity between the female mould part and a male mould part. According to one aspect of the invention the device fixed to a movable frame may alternatively be used for placing an item, such as an internal lining of the finished product, on a male mould part of an injection moulding apparatus.

## Description

The present invention relates generally to injection moulding apparatuses, and broadly provides a novel way of fixing a device to a movable frame, such as a robot arm, of the apparatus, the device being for inserting an item into a female mould part of the apparatus prior to moulding an object or product in the cavity between the female mould part and a male mould part. According to one aspect of the invention the device fixed to a movable frame may alternatively be used for placing an item, such as an internal lining of the finished product, on a male mould part of an injection moulding apparatus.

Conventionally, the aforementioned devices are supported by the movable frame using rather complicated fixtures, and rearranging or replacing the device is rather time consuming.

The invention provides particular advantages where a robot with a fixture is used for placing a label in the female mould part; the process of placing a label into a female mould part and then integrally moulding a product, such as a packaging, with that label is generally known as in-mould-labelling or IML.

Common to the known IML apparatuses is that the label inserting device and the female mould part may become slightly misaligned over time; in other words: their centre-axes may no longer be coincident and alignment is required. The misalignment poses a particular problem in that the inserted labels may either assume an undesired position on the finished product or become damaged on the misaligned insertion device being moved forward into the female mould part; hence, many faulty products may leave the apparatus, with a resulting loss of revenue. Also, if the apparatus is not stopped within a short time for manual alignment of the device the movable frame supports may also be damaged. Stopping the apparatus for alignment in itself reduces the number of products that can be made over time using the apparatus.

The invention seeks to solve the above problems in a highly simple manner, by the device being fixed to the movable frame by magnetic attraction. According to a preferred embodiment alignment faces are provided that will shift the device sideways with respect to the frame, into an aligned position. The alignment faces may be provided on the device and on the female mould part proper.

The invention will now be discussed in further details, with reference to two embodiments.
Fig. 1a, 1b and 1c illustrate three steps of the operation of an apparatus of the present invention, wherein a label is either wound around a label insertion device or simply displaced into the female mould part by the device,
Fig. 1d is a rear view of an exemplary device of fig. 1a, and
Figs. 2 shows an injection moulding apparatus having the device of fig. 1a for inserting a label into a female mould part, and
Fig. 3 shows another label placing device of the invention.

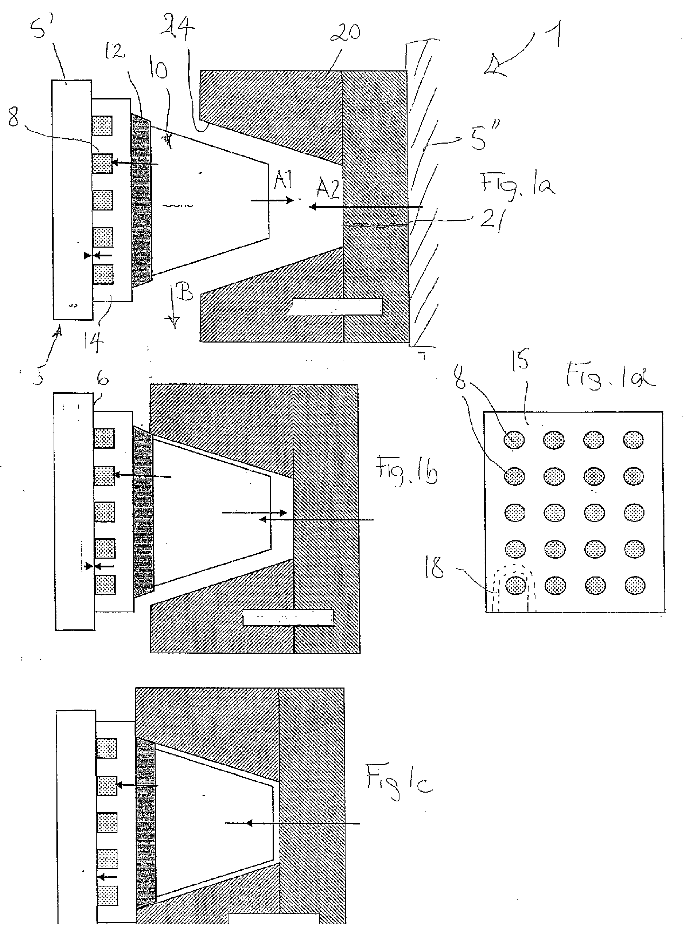

Figs. 1a-c show a cross-sectional schematic view of a part of an injection moulding apparatus, generally designated reference numeral 1 and having a male or second mould part (not shown) and a first or female mould part 20 for receiving the male mould part. The apparatus 1 includes a frame 5 with a fixture 5' for fixing a device 10 for inserting a blank, such as a flexible label, into the female mould part 20; the exemplary apparatus may be used for moulding labelled conical plastic containers.

When moulding a product one of the mould parts is moved forward to close the mould; normally the male mould part is moved forward along direction A1 towards the female mould part 20. After moulding the product the mould parts are moved away from each other, to allow removal of the moulded product; often the male mould part is moved along direction A2.

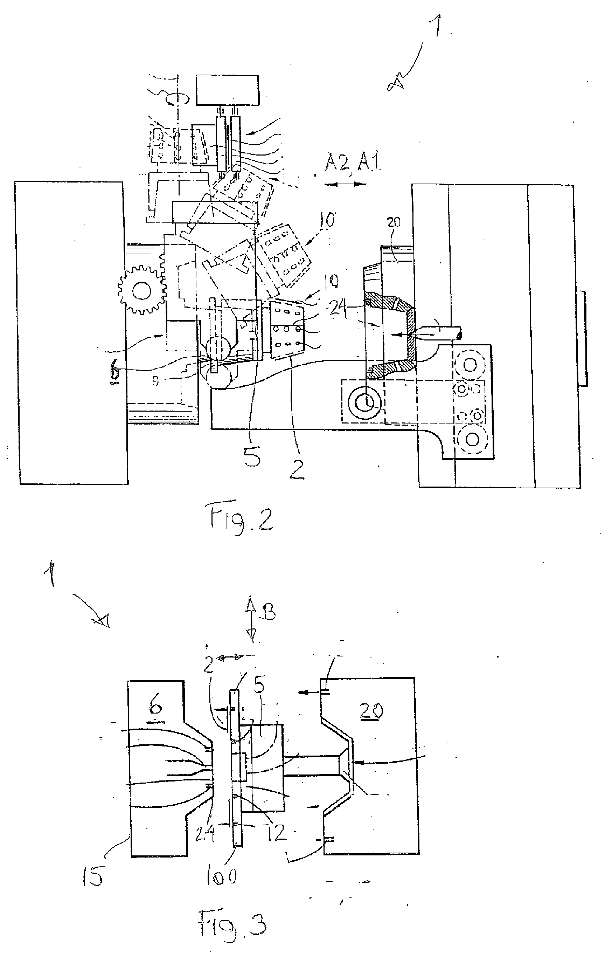

The device 10 for inserting an item, such as a label, may be mounted onto a fixture 5' that forms part of a movable frame 5 that may, as shown in fig. 2 taken from WO 93/11 924, be movable from a position facing the female mould part to a labelling position wherein a label 2 is wound around the device 10. The exemplary device 10 which is conical now carries the label 2 and is then moved to a position facing the female mould part 20, from where it is moved forward to be received by the female mould part 20.

When any misalignment occurs between the device 10 and female mould part 20, i.e. if their centre-axes no longer are coincident, alignment must be carried out. Conventionally, this is done manually by releasing bolts or other means keeping the mould parts to their fixtures, and then shifting the mould part into correct position.

In the shown embodiment, in case of misalignment, slanted peripheral alignment faces 12, 24 (extending into and out of the plane of the drawing) on the device 10 and the female mould part 20 will slide against each other on device 10 and the female mould part 20 being moved together, as shown in fig. 1b. The contact between the alignment faces 12, 24 sets up a reaction force perpendicular to the direction A1 of forward movement, i.e. along direction B, as shown in fig. 1 b. Through the invention an 'automatic' relative movement perpendicular to the direction A1 of the device relative to the frame 5 is thereby enabled and brought about, as explained below, while still maintaining the device 10 fixed to the frame 5, thus avoiding the need for manual adjustment of the position of the device 10.

More specifically, fig. 1 a-c shows a number of magnets 8, preferably electromagnets that secure the device 10 to the fixture 5' of the frame 5. Preferably, the magnet 8 is a part of the device 10 and the fixture 5' is a steel plate or other plate having an affinity for the magnet 8 such that preferably the magnet 8 defines the only means of attachment of device 10 to the fixture 5'. The rear surface 15 of the device 10, as well as the abutting surface 6 of the fixture 5', is flat whereby during the alignment these two surfaces 6, 15 slide against each other as the device 10 is moved in direction B while the magnet 8 still maintain the surfaces 6, 15 closely together. The aforementioned reaction force, and the alignment faces 12, 24, drives the device 10 in a controlled manner sideways along direction B, into the desired position with respect to the female first mould part 20, and this occurs before the moment that a label on the device 10 would otherwise be damaged due to the misalignment, through a direct contact between the label and the female mould part.

It is noted that the strength of the magnetic force fixing the device 10 to the frame 5 may be selected as desired; the force should be sufficient to maintain the device 10 in contact with the fixture 5' during the entire item insertion cycle while still allowing relative movement along direction B whenever required. When replacing or removing the device 10 is required electromagnet power is simply switched off.

The device 10 shown in figs. 1a-c may have conventional conduits, as shown in fig. 1d, for establishing a vacuum for temporarily maintaining the label in place on the surface of the device 10, when the apparatus includes a device as generally outlined in fig. 2.

A device 100 magnetically fixed to a movable frame 5, such as one mounted on a robot arm (not shown), to define an implement may in accordance with the invention alternatively be used for placing an item, such as an item to appear as an internal lining 2 of the finished product, onto the peripheral sides of a male mould part 6 of an injection moulding apparatus. By way of example, in fig. 3 structure 6 represents a male mould part onto which an item is to be placed by device 100; cooperating peripheral alignment surfaces 12, 24 sliding in part against each other in case of misalignment may be provided on structures 6 and 100 to provide for any required aligning movement in direction B, preferably of device 100, as device 100 and structure 6 are moved together. The alignment surfaces 12, 24 may be slanted with respect to the direction along which the device 100 and the structure 6 are moved together. When properly aligned the item 2 may be transferred to the male mould part 6 in the manner described in US patent no. 4 795 597.

## Claims

1. An injection moulding apparatus (1) including a first mould part (20) and a second mould part (6), said second mould part (6) being movable into said first mould part (20) from a spaced apart position, and a movable frame (5) with a device (10) for transferring an item or insert, such as a label (2), to said first mould part (20) by a forward movement of said device (10) towards said first mould part (20) when said first mould part (20) and said second mould part (6) are in said spaced apart position, for subsequent moulding of a product carrying said item, **characterised in** said device (10) being fixed to said frame (5) by magnetic attraction.

2. The injection moulding apparatus of claim 1, allowing for a movement (B) with respect to said frame (5) of said device (10) fixed by magnetic attraction.

3. The injection moulding apparatus of claim 2, including alignment faces (12, 24) suitable for bringing said device (10) into alignment with said female mould part (20) during said forward movement, said alignment faces (12, 24) contacting and moving against each other to provide said movement (B) if said device (10) and said first mould part (20) are not aligned.

4. The injection moulding apparatus according to claim 3, said device (10) and said second mould part (20) including substantially conical/frusto-conical alignment faces (12, 24).

5. The injection moulding apparatus according to claim 3 or 4, said alignment faces (12, 24) being slanted with respect to the direction (A1) of said forward movement.

6. The injection moulding apparatus according to any of the preceding claims, said device (10) being adapted to receive by winding a label (2) and being movable between a position for winding of said label (2) around said device (10) and a position at least partially received within said first mould part (20).

7. The injection moulding apparatus according to any of the preceding claims, said frame (5) including a fixture (5') for fixing said device (10) to said frame (5), said device (10) or said fixture (5') including a magnet (8), preferably an electromagnet, and the other one of said device (10) or said fixture (5') having an affinity for magnetic attraction.

8. The injection moulding apparatus of the preceding claim, said device (10) including a backing plate (14) including said magnet (8).

9. The injection moulding apparatus according to claim 7 or 8, a surface (6) of said fixture (5') being complementary with a rear surface (15) of said device (10).

10. The injection moulding apparatus of the preceding claim, said surfaces (6, 15) being flat and extending perpendicular to the direction (A1) of said forward movement.

11. The injection moulding apparatus according to any of the preceding claims, said first mould part (20) including an injection opening (21) for injecting a plastics material

12. The injection moulding apparatus according to any of the preceding claims, said device (10) including means for temporary holding said item to a surface of said device (10), such as conduits (18) establishing a vacuum.

13. An implement for placing an item, such as a label (2), onto or within a mould part, female (20) or male (6), of an injection moulding apparatus, said implement including a movable frame (5) with a device (10, 100) for releasably holding said item, the device (10) being movable by said frame (5) towards said mould part (6, 20) and being adapted to then release said item, **characterised in** said device (10, 100) being fixed to said frame (5) by magnetic attraction.

14. The implement of claim 13, allowing for a movement (B) of said device (10, 100) with respect to said frame (5).

15. The implement of claim 14, including alignment faces (12, 24) suitable for bringing said device (10) into alignment with said mould part (20, 100) during said movement, said alignment faces (12, 24) contacting and moving against each other to provide said movement (B) if said device (10) and said first mould part (20) are not aligned.
